# EUROPÄISCHE PATENTANMELDUNG

(11) **EP 2 239 050 A1**
(43) Veröffentlichungstag der Anmeldung: **13.10.2010**
(21) Anmeldenummer: 10159326.7
(22) Anmeldetag: 08.04.2010
(51) Int. Cl.: B01F 3/04, C02F 3/06, C02F 3/14, C02F 3/22

(54) **Anlage zur biologischen Abwasserbehandlung**

(30) Priorität: 09.04.2009 DE 102009017067
(71) Anmelder: Fuchs, Leonhard, Dipl.-Ing., 56727 St. Johann (DE); Fuchs, Martin, 56727 Mayen (DE)
(72) Erfinder: Fuchs, Leonhard, Dipl.-Ing., 56727 St. Johann (DE); Fuchs, Martin, 56727 Mayen (DE)
(74) Vertreter: von Kreisler Selting Werner

(57) **Zusammenfassung**

Ein biologischer Abwasserreaktor hat ein Becken (11), in welchem sich mindestens ein Festbett (18) für die Ansiedlung von Mikroorganismen befindet. Das Festbett (18) enthält einen vertikalen Schacht (19), durch den eine Belüftungseinrichtung abgesenkt werden kann. Die Belüftungseinrichtung ist ein selbstansaugender Rotationsbelüfter (20). Die Anlage ist kostengünstig herstellbar, leicht zu warten und zu reparieren. Der Rotationsbelüfter (20) kann durch den Schacht herausgenommen werden, ohne das Festbett zu entfernen.

## Beschreibung

Die Erfindung betrifft eine Anlage zur biologischen Abwasserbehandlung mit einem das Abwasser aufnehmenden Becken, in welchem mindestens ein getauchtes und belüftetes Festbett angeordnet ist.

Es ist bekannt, bei der biologischen Abwasserreinigung Biofilmverfahren anzuwenden, bei denen im wesentlichen sessile Mikroorganismen wirksam sind, die sich auf Aufwuchsflächen in Festbetten ansetzen. In der Zeitschrift "WasserAbwasserPraxis, Heft 2, März 1998, 42-46, ist ein belüfteter Festbettreaktor beschrieben, der aus zwei kaskadenartig verbundenen Becken besteht, von denen jedes ein Festbett enthält, welches auf einer Tragkonstruktion auf dem Beckenboden ruht. Das Festbett stellt die Aufwuchsflächen für Mikroorganismen bereit. Zur Sauerstoffversorgung der sessilen Biomassen ist eine Druckbelüftung vorgesehen, die gleichzeitig die Umwälzung und Durchmischung des Wasserkörpers sowie eine Spülung des Festbetts bewirkt. Die Belüftung erfolgt über Rohre, die Auslässe unterhalb des Festbetts am Beckenboden haben. Eine Schwierigkeit bei einer Druckbelüftung besteht darin, dass eine gleichmäßige Verteilung der feinblasigen Luft über den Grundriss des Beckens erschwert zu erreichen ist. Dadurch werden verschiedene Bereiche des Festbettes unterschiedlich stark mit Luft versorgt. Druckbelüfter erfordern eine gleichmäßige Verteilung der austretenden Luft zur Erzielung einer hohen Besiedelungsdichte des Festbettes. Sie erfordern ferner außerhalb des Beckens einen Kompressor.

Bekannt sind ferner Rotationsbelüfter zum Eintragen von Sauerstoff in Abwasser in einem Belebungsbecken, das keine Festbetten enthält. Rotationsbelüfter haben ein in der Flüssigkeit rotierendes Flügelrad welches Luft und Wasser ansaugt und durchmischt, um das Wasser mit Sauerstoff anzureichern und innerhalb des Beckens in Zirkulation zu versetzen. Eine Unterform der Rotationsbelüfter sind Belüfter, die am Beckenboden angeordnet sind und eine Luftansaugleitung haben. Die Wasserströmung wird radial nach außen beschleunigt und die darin enthaltenen Luftblasen sorgen für eine aufwärtsgerichtete Strömung.

Die bekannten Abwasserreaktoren erfordern bei der Herstellung, Wartung und Reinigung einen hohen Aufwand, um einen effektiven Betrieb aufrechtzuerhalten.

Der Erfindung liegt die Aufgabe zugrunde, eine Anlage zur biologischen Abwasserbehandlung zu schaffen, die einfach und kostengünstig herstellbar und leicht zu warten ist.

Die erfindungsgemäße Anlage zur biologischen Abwasserbehandlung ist durch den Patentanspruch 1 definiert. Sie ist **dadurch gekennzeichnet, dass** das Festbett in der Draufsicht ringförmig ausgebildet ist und einen vertikalen Schacht hat, und dass die Belüftungseinrichtung ein selbstansaugender Rotationsbelüfter ist, der sich innerhalb der vertikalen Projektion des Schachtes befindet.

Das Festbett hat einen vorzugsweise mittig angeordneten vertikalen Schacht, der die Ausbildung von Strömungswalzen begünstigt, welche im Schacht aufsteigen und schließlich durch das Festbett hindurch nach unten strömen. Ein wesentlicher Vorteil des Schachts besteht darin, dass durch den Schacht der Rotationsbelüfter in das Becken eingesetzt und auch wieder herausgenommen werden kann, ohne dass dies durch das Festbett behindert würde. Dass das Festbett ringförmige ausgebildet ist, bedeutet, dass die Festbettstruktur den freien und von Strukturteilen nicht behinderten Schacht wie ein geschlossener Ring umgibt. Dieser Ring kann eine runde oder polygone Innenkontur und eine runde oder polygone Außenkontur haben.

Im Gegensatz zu einer Druckluftbelüftung benötigt der Rotationsbelüfter keinen externen Kompressor. Während die Luftauslässe von Druckbelüftern gleichmäßig verteilt und auf gleicher Höhe montiert sein müssen, stellen Rotationsbelüfter hinsichtlich der Montagegenauigkeiten viel geringere Anforderungen. Der Rotationsbelüfter kann in einfacher Weise in den Schacht abgesenkt und aus diesem herausgeholt werden.

Der Rotationsbelüfter ist vorzugsweise als Tauchbelüfter ausgebildet, der auf dem Beckenboden steht und unterhalb der Tragkonstruktion für die Festkörper angeordnet ist. Ein derartiger Tauchbelüfter hat eine durch den Schacht hindurchgehende Luftansaugleitung.

Wenn der Rotationsbelüfter ein Ansaugbelüfter ist, dessen Laufrad sich im oberen Bereich des Schachtes befindet, wird das im Schacht aufsteigende Wasser mit Sauerstoff angereichert und strömt oberhalb des Festbetts nach außen und von dort durch das Festbett nach unten zum Beckenboden zurück. Ein ähnliche Wirkung ergibt sich bei einem Oberflächenbelüfter, dessen Laufrad sich oberhalb des Schachts im Bereich der Wasseroberfläche befindet.

Die Erfindung ermöglicht auch eine gute Raumausnutzung des Beckenvolumens. Das Beckenvolumen wird vorzugsweise von dem mindestens einen Festbett vollständig ausgefüllt, wobei lediglich der Schacht freigehalten ist.

Die Erfindung eignet sich auch für eine Modulbauweise, bei der mehrere unterschiedlich große Beckenmodule vorgesehen sind, in die ein Typ von Festkörpermodulen in unterschiedlichen Anzahlen hineinpasst.

Im Folgenden werden unter Bezugnahme auf die Zeichnungen Ausführungsbeispiele der Erfindung näher erläutert.

Es zeigen:
- Fig. 1: einen schematischen Vertikalschnitt durch einen biologischen Abwasserreaktor,
- Fig. 2: einen Horizontalschnitt,
- Fig. 3: in vergrößertem Maßstab eine Seitenansicht des Rotationsbelüfters in Form eines Tauchbelüfters,
- Fig. 4: einen Abwasserreaktor mit Saugbelüfter,
- Fig. 5: einen Abwasserreaktor mit Oberflächenbelüfter,
- Fign. 6 - 9: verschiedene Abwasserreaktoren unterschiedlicher Größen, die in Modulbauweise mit demselben Typ von Festbett bestückt sind und
- Fign. 10 und 11: zwei weitere Ausführungsformen mit zentrischer und asymmetrischer Anordnung des Schachts in Bezug auf das Festbett.

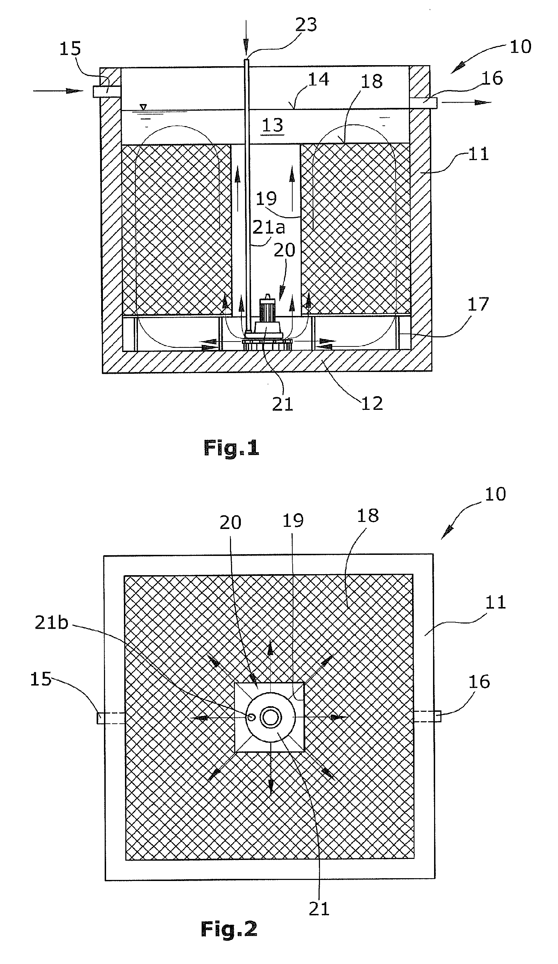

Bei dem Ausführungsbeispiel der Figuren 1 - 3 ist ein Festbettreaktor 10 vorgesehen, der ein Becken 11 hat, das beispielsweise aus Beton besteht. Das Becken 11 hat hier quadratischen Grundriss. Es hat vertikale Seitenwände und einen horizontalen Beckenboden 12. In dem Becken 11 befindet sich das biologisch zu behandelnde Abwasser 13, wobei die Wasseroberfläche mit 14 bezeichnet ist. Das Becken 11 hat einen Abwasserzulauf 15 und einen Abwasserablauf 16 an entgegengesetzten Seiten und höhenmäßig zueinander versetzt. Der Abwasserablauf 16 bestimmt die Höhe des Wasserspiegels.

In dem Becken 11 befindet sich ein Festbett 18 zur Ansiedlung von Mikroorganismen, die die im Abwasser enthaltenen Schadstoffe abbauen bzw. oxidieren. Das Festbett 18 ruht auf einer Tragkonstruktion 17 im Abstand über dem Beckenboden 12. Es füllt im vorliegenden Fall den Grundriss des Beckens vollständig aus, d. h. seine äußeren Abmessungen entsprechen den inneren Abmessungen des Beckens 11, so dass das Festbett allseitig Wandkontakt oder Wandnähe zum Becken 11 hat, mit Ausnahme des Beckenbodens 12. Das Festbett 18 besteht in bekannter Weise aus Folien oder einem dreidimensionalen Netzwerk. Es ist durchlässig für das Abwasser und die darin enthaltenen Luftblasen. Das Festbett kann auch aus einer Wabenstruktur oder Röhren bestehen.

Das Festbett 18 weist einen vertikalen Schacht 19 auf, der sich über die gesamte Höhe des Festbetts erstreckt und frei von Strukturteilen und Einbauten ist. Der Schacht 19 bildet einen vertikalen Kanal, durch den das Wasser ungehindert hindurchströmen kann. Das Material des Festbetts 18 umgibt den Schacht 19 ringförmig, wobei auch die in Figur 2 dargestellte Rechteckstruktur als unter den Begriff ringförmig fallend zu verstehen ist.
Unterhalb des Schachtes 19 befindet sich ein Rotationsbelüfter 20, der bei diesem Ausführungsbeispiel als Tauchbelüfter 21 ausgebildet ist. Der Tauchbelüfter steht unmittelbar oder auf einem Sockel auf dem Beckenboden 12.

Er weist eine Luftansaugleitung 21a auf, die im Schacht aufragt und oberhalb der Wasserfläche 14 eine Ansaugöffnung 23 hat.

Der Rotationsbelüfter 20 ist innerhalb der vertikalen Projektion des Schachts 19 angeordnet. Dies bedeutet, dass er durch den Schacht 19 hindurch abgesenkt und erforderlichenfalls herausgezogen werden kann.

Der Tauchbelüfter 21 erzeugt eine Strömung, die durch die Pfeile angedeutet ist. Die Strömung aus Wasser und Luftblasen steigt überwiegend in dem Schacht 19 auf und verteilt sich dann oberhalb des Festbetts 18 radial, um schließlich in Wandnähe des Beckens wieder abzusinken. Es entstehen Strömungswalzen mit gleichmäßiger Strömungsverteilung über den Beckengrundriss.

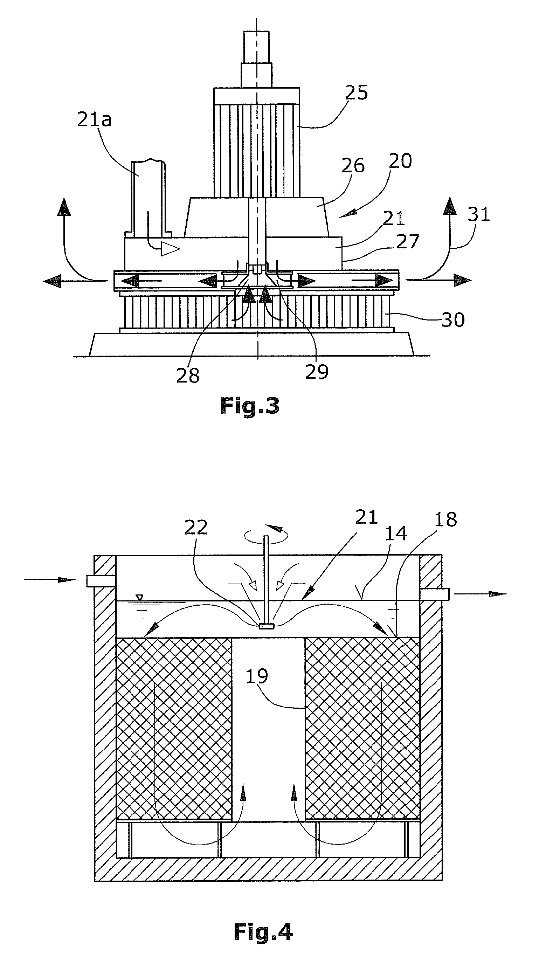

Figur 3 zeigt eine Ausführungsform des Tauchbelüfters 21. Dieser hat einen mit vertikaler Achse angeordneten Motor 25, der auf einem Gehäuse 26 montiert ist. Das Gehäuse enthält eine Luftkammer 27, die mit der Luftansaugleitung 21a verbunden ist und einen Durchlass zu einer Mischkammer 28 hat. In der Mischkammer 28 rotiert ein Flügelrad 29, das durch einen Käfig 30 Wasser von unten her ansaugt und mit der ebenfalls angesaugten Luft feinblasig vermischt. Das Gemisch tritt in Form einer radialen Strömung 31 aus dem Tauchbelüfter auf. Infolge der in der Strömung enthaltenen Luft steigt die Strömung auf.

Figur 4 zeigt eine Ausführungsform bei der der Rotationsbelüfter 20 als Saugbelüfter 22 ausgebildet ist, dessen Laufrad sich oberhalb des Schachtes 19, jedoch unter der Wasseroberfläche 14 befindet. Das Laufrad könnte auch im oberen Bereich des Schachtes 19 angeordnet sein. Der Saugbelüfter 22 saugt Wasser axial nach oben an und stößt dieses vermischt mit Luft radial aus.

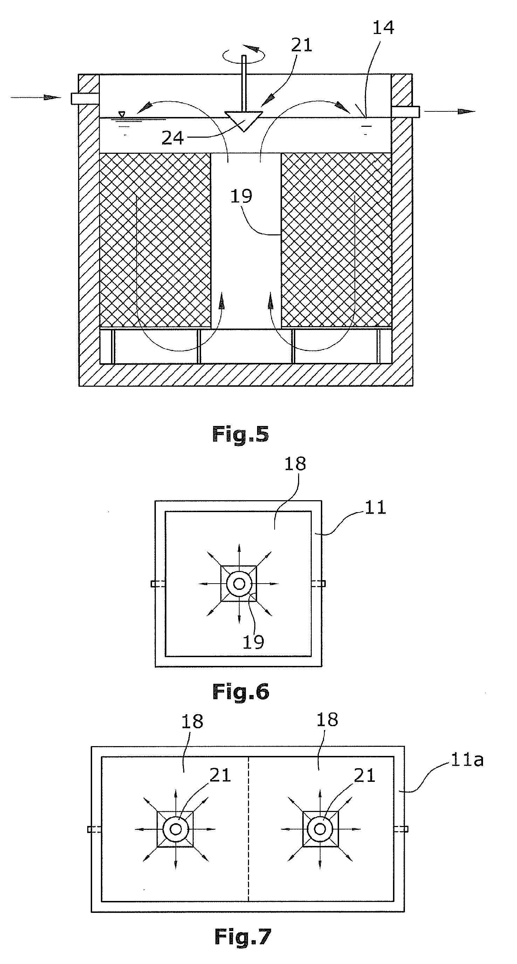

In Figur 5 ist der Rotationsbelüfter 20 als Oberflächenbelüfter 24 ausgebildet, dessen Laufrad sich oberhalb des Schachtes 19 im Bereich der Wasseroberfläche 14 befindet.

In allen Fällen ist der Rotationsbelüfter 20 ein selbst ansaugender Belüfter oder Oberfilächenbelüfter, dessen Achse innerhalb der vertikalen Projektion des Schachtes 19 angeordnet ist. Die Förderrichtung des Rotationsbelüfters ist stets so, dass die Strömung im Schacht 19 von unten nach oben gerichtet ist.

Die Figuren 6 - 9 zeigen Beispiele für einen modularen Aufbau des Abwasserreaktors. Hierbei sind Becken 11, 11a, 11b, 11c unterschiedlicher Größe vorgesehen, die auf denselben Typ von Festbett 18 abgestimmt sind. In Figur 6 passt in das Becken 11 ein einziges Festbett 18 der zuvor beschriebenen Art genau hinein. In Figur 7 ist das Becken 10a rechteckig und langgestreckt, wobei das Seitenverhältnis 2:1 beträgt. Ein derartiges Becken nimmt zwei modulartige Festbetten 18 nebeneinander auf. Jedes Festbett hat einen Schacht in Verbindung mit einem entsprechenden Rotationsbelüfter 20. An drei Seiten hat das Festbett 18 Wandberührung mit der Beckenwand.

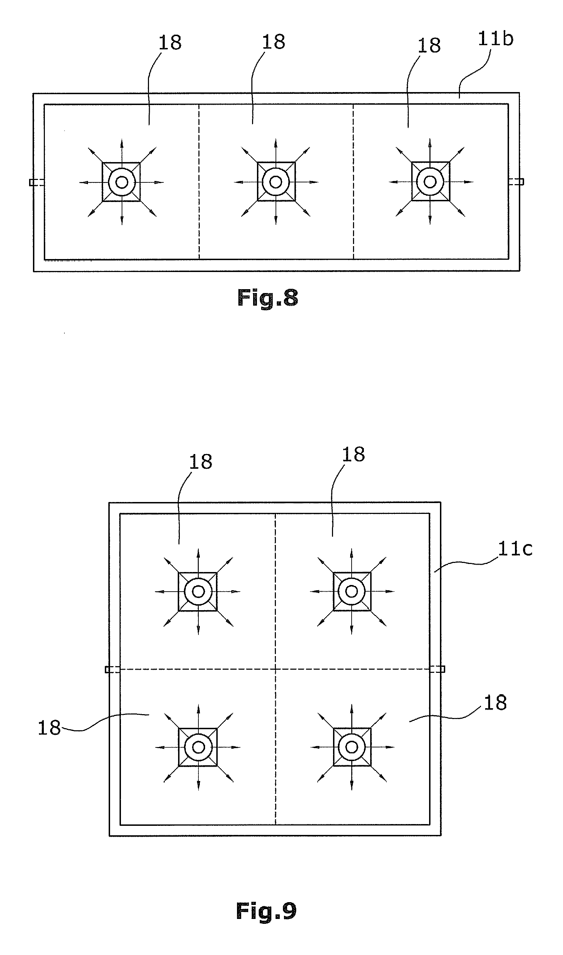

Das Becken 11b von Figur 8 ist ein rechteckiges Dreierbecken, in dem drei Festbettmodule 18 nebeneinander angeordnet sind und das Becken in Draufsicht ausfüllen.

Das Becken 11c in Figur 9 hat quadratischen Grundriss. Es nimmt vier gleichartige Festbettmodule 18 in Schachbrettanordnung auf, die den Grundriss des Beckens passend ausfüllen.

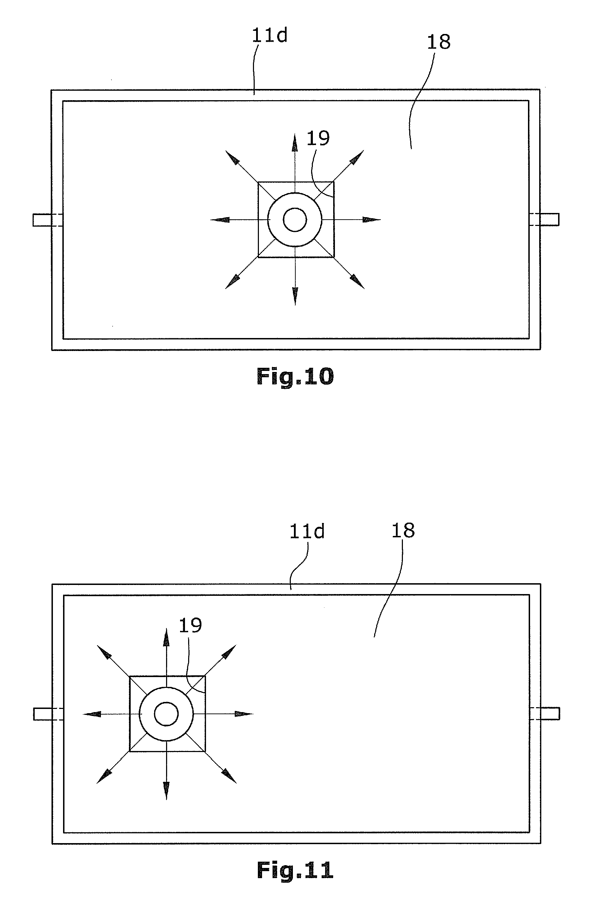

Figur 10 zeigt eine Ausführungsform eines rechteckigen länglichen Beckens 11d mit einem Festbett 18, das der Beckengröße angepasst ist, wobei der Schacht 19 sich in der Beckenmitte befindet.

Figur 11 zeigt das Becken 11d von Figur 10 in Kombination mit einem modifizierten Festbett 18, in dem der Schacht 19 außermittig angeordnet ist.

## Patentansprüche

1. Anlage zur biologischen Abwasserbehandlung, mit
- einem Becken (11), das einen Abwasserzulauf (15) und einen Abwasserablauf (16) hat,
- mindestens einem in dem Becken mit Abstand über dem Beckenboden (12) angeordneten Festbett (18), und
- einer Belüftungseinrichtung zum Eintragen von Luft in das Abwasser,
**dadurch gekennzeichnet,**
**dass** das Festbett (18) in Draufsicht ringförmig ausgebildet ist und einen durchgehenden vertikalen Schacht (19) hat und dass die Belüftungseinrichtung ein selbstansaugender Rotationsbelüfter (20) ist, der sich innerhalb der vertikalen Projektion des Schachtes (19) befindet.

2. Anlage nach Anspruch 1, **dadurch gekennzeichnet, dass** der Rotationsbelüfter (20) ein auf dem Beckenboden (12) stehender Tauchbelüfter ist, der eine durch den Schacht (19) verlaufende Luftansaugleitung (21a) hat.

3. Anlage nach Anspruch 2, **dadurch gekennzeichnet, dass** der Tauchbelüfter ein um eine vertikale Achse rotierendes, axial wasseransaugendes und radial förderndes Schaufelrad (28) hat.

4. Anlage nach Anspruch 1, **dadurch gekennzeichnet, dass** der Rotationsbelüfter (20) ein oberhalb des Festbettes (18) angeordneter Oberflächenbelüfter (24) ist, der Wasser von unten ansaugt und über die Wasserfläche versprüht.

5. Anlage nach einem der Ansprüche 1 - 4, **dadurch gekennzeichnet, dass** der Rotationsbelüfter (20) derart angeordnet ist, dass er in dem Schacht (19) eine Strömung von unten nach oben erzeugt.

6. Anlage nach Anspruch 2, **dadurch gekennzeichnet, dass** der Tauchbelüfter (21) auf dem Beckenboden (12) steht und durch den Schacht (19) absenkbar und herausziehbar ist, ohne das Festbett (18) zu entfernen.

7. Anlage nach einem der Ansprüche 1 - 6, **dadurch gekennzeichnet, dass** der Schacht (19) im Querschnitt quadratisch oder rechteckig ist.

8. Anlage nach einem der Ansprüche 1 - 7, **dadurch gekennzeichnet, dass** das Becken (11) in Draufsicht quadratisch oder rechteckig ist.

9. Anlage nach einem der Ansprüche 1 - 8, **dadurch gekennzeichnet, dass** das Festbett (18) quadratisch oder rechteckig ist und an mindestens drei Seiten Wandberührung mit der Beckenwand hat.

10. Anlage nach einem der Ansprüche 1 - 9, **dadurch gekennzeichnet, dass** der Beckenboden (12) mit einem oder mehreren Festbetten (18) vollständig bedeckt ist, wobei lediglich die unterhalb des Schachtes (19) liegenden Bodenflächen nach oben unbedeckt sind.

11. Anlage nach einem der Ansprüche 1 - 10, **dadurch gekennzeichnet, dass** mehrere unterschiedlich große Becken (11, 11a - 11c) in Modulbauweise vorgesehen sind, wobei ein Typ von Festkörpermodul in unterschiedlichen Anzahlen in die Becken hineinpasst.
